# EUROPEAN PATENT APPLICATION

(11) **EP 4 715 377 A1**
(43) Date of publication of application: **25.03.2026**
(21) Application number: 24806674.8
(22) Date of filing: 17.05.2024
(51) Int. Cl.: G01N 27/327

(54) **BIOSENSOR**

(30) Priority: 18.05.2023 CN 202321209787 U
(71) Applicant: Leadway (HK) Limited, Sheung Wan, Hong Kong (CN)
(72) Inventor: JI, Xubo, Hangzhou, Zhejiang 310030 (CN); LEI, Tianran, Hangzhou, Zhejiang 310030 (CN); WANG, Yi, Hangzhou, Zhejiang 310030 (CN); WU, Mengqun, Hangzhou, Zhejiang 310030 (CN); GUO, Tao, Hangzhou, Zhejiang 310030 (CN); ZHANG, Li, Hangzhou, Zhejiang 310030 (CN)
(74) Representative: Schiweck Weinzierl Koch Patentanwälte Partnerschaft mbB
(86) International application number: PCT/CN2024/094003
(87) International publication number: WO 2024/235325

(57) **Abstract**

The present invention provides a biosensor, including a substrate, a conductive layer disposed on the substrate, engraved lines being distributed on the conductive layer, and electrodes formed by separation with the engraved lines, where an enlarged region is provided on the engraved line, and a line width of the enlarged region is greater than a line width of the engraved line. The biosensor of the present invention is beneficial to improving the qualification rate of finished products in a production and preparation process and ensuring the accuracy of detection during use of the biosensor.

## Description

### TECHNICAL FIELD

The present invention relates to the field of biomedical detection, and in particular to a biosensor.

### BACKGROUND

Electrochemical sensors for detecting the content of analytes in samples and their supporting testing instruments have been widely used in the daily monitoring of diseases. For example, patients with diabetes commonly use electrochemical sensors to monitor the daily concentration of glucose in blood.

The basic structure of such electrochemical sensors includes: an electrode system disposed on an insulating substrate, where the electrode system includes multiple or various types of electrodes such as working electrodes and counter electrodes, with reagents that react with analytes coated on the corresponding electrodes. A sample spacer layer with grooves is located on the electrodes, and a cover sheet with air holes covers the sample spacer layer. The insulating substrate, spacer layer and cover sheet form a sample introduction channel, with the other end of the electrode system in contact with the contacts of the testing instrument. Samples flowing into the sample introduction channel react with reagents on the electrodes to generate electrical signals, and the testing instrument derives detection results based on these electrical signals.

The electrodes may be formed on the insulating substrate by means of screen printing. The electrodes may also be formed by uniformly spreading a thin-film conductive layer on the insulating substrate in advance and then using laser etching technology. The thin-film conductive layer may be selected from metallic conductive layers such as gold or palladium, or non-metallic conductive layers such as carbon or conductive glass.

The properties of the thin-film conductive layer affect the structure, electrode design, manufacturing process, user experience, and testing performance of the biosensor. If the thin-film conductive layer is soft and loose in texture or has moderate adhesion to the insulating substrate, conductive particles may peel off or detach from the conductive layer under the action of external force. The external forces may include: the shearing force exerted on the conductive layer by the cutting tool during the process of cutting semi-finished sensors into individual independent sensors using cutting tools in the biosensor manufacturing process; the scraping force exerted on the sensor by the detection contact pins of the testing instrument when a user inserts the sensor into the testing instrument; or the mutual scraping force between sensors during transportation after they are packaged in a tube, etc. These peeled-off or detached conductive particles may remain in the nearby engraved lines, causing a short circuit between the two electrodes on both sides of the engraved line that should originally be disconnected from each other, and thus the resulting finished product can only be scrapped.

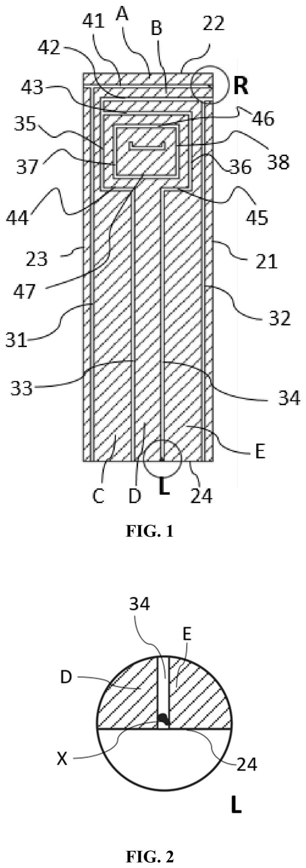

The effect of conductive particles falling into the engraved lines on a test is explained through the examples shown in FIGS. 1 to 5.

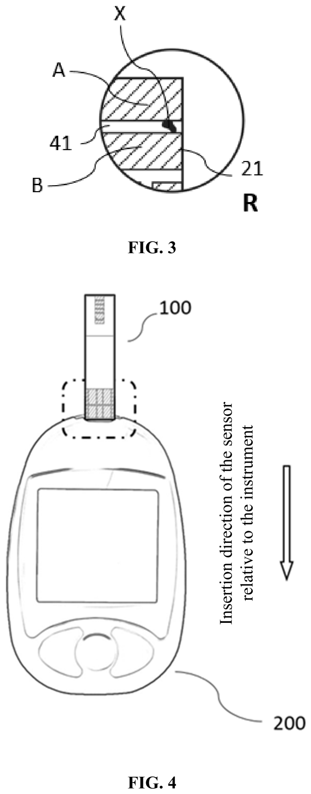

The biosensor illustrated in FIG. 1 is a biosensor with a thin-film conductive layer. For the convenience of explanation, an upper cover, a spacer layer, etc. are not shown in FIG. 1. As shown in FIG. 1, edge lines 21 and 24 of the conductive layer of the biosensor are obtained after the cutting tool cuts along a preset route. The movement path of the cutting tool intersects with engraved lines 31, 32, 33, 34, 41, and 42. A conductive region A and an electrode B on both sides of an engraved line 41 are separated by the engraved line 41, remaining disconnected from each other with no electrical conduction. An electrode D and an electrode E on both sides of an engraved line 34 are separated by the engraved line 34, remaining disconnected from each other with no electrical conduction. FIG. 2 and FIG. 3 are enlarged views of FIG. 1 at an instrument contact end L and a sample contact end R of the sensor, respectively. As shown in FIG. 2, when the cutting tool cuts along the preset route to form the edge line 24 of the conductive layer, and when it cuts to the engraved line 34, the conductive layer is subjected to mechanical shearing force from the cutting tool. This may cause conductive particles X to peel off or detach from the conductive layer and remain in the engraved line 34, thereby leading to electrical conduction and a short circuit between the electrode D and the electrode E due to the conductive particles X. The biosensor with such an issue detected during the quality inspection process in production will be treated as an unqualified product. If a user inserts such a biosensor into the testing instrument, the testing instrument will detect the short circuit between the electrode D and the electrode E, automatically report an error, and prompt the user that the biosensor cannot be used. As shown in FIG. 3, when the cutting tool cuts along the preset route to form the edge line 21 of the conductive layer, and when the tool cuts to the engraved line 41, the peeled-off conductive particles X may remain in the engraved line 41. This causes electrical conduction to occur between the electrode B and the conductive region A, leading to a short circuit between the conductive region A and the electrode B. As a result, the electrode area of electrode B at the sample contact end changes, which may cause fluctuations in the transmitted signal and thus lead to deviations in the test values of the sensor.

On the other hand, when a user performs a blood glucose test and inserts the biosensor into the testing instrument, the contact pins inside the testing instrument move relative to the sensor. These contact pins may scrape the exposed thin-film conductive layer of the biosensor, thereby generating peeled-off or detached conductive particles. If these scrape-induced conductive particles remain between two adjacent conductive regions, they may also cause a short circuit between the conductive regions on both sides of the engraved line.

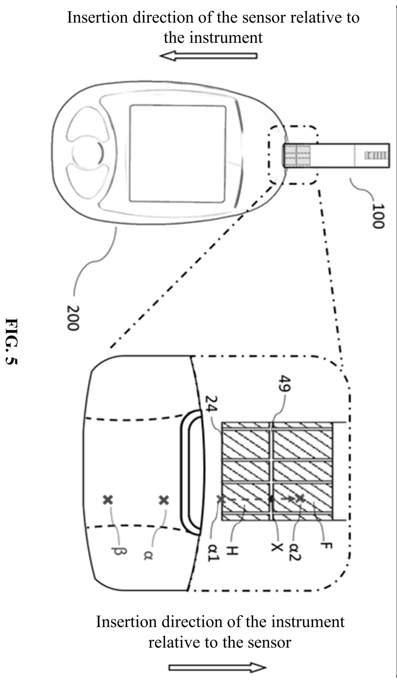

As shown in FIG. 4 and FIG. 5, a sensor 100 is inserted into the testing instrument 200 for sample measurement. From the moment when the edge line 24 of the conductive layer at the instrument contact end of the sensor comes into contact with the contact pins of the testing instrument, until the sensor is inserted into the preset position (i.e., the testing position) in the instrument, the contact pins of the instrument may scrape the conductive layer to a certain extent along their movement path relative to the sensor. After the conductive layer is subjected to force, there is a certain probability that conductive particles will peel off or detach and remain in the nearby engraved lines. As shown in FIG. 4, the insertion direction of the sensor relative to the instrument is downward, while the insertion direction of the instrument relative to the sensor is upward. FIG. 5 is a partial enlarged view of a dashed box area in FIG. 4. After the sensor is inserted, contact pins α and β inside the testing instrument come into contact with an electrode F and a conductive region H, respectively, to transmit electrical signals to the testing instrument. During the insertion process, the contact pin α first comes into contact with the edge line 24 of the conductive layer of the sensor. At this point, the position of the contact pin α on the conductive layer is denoted as α1. When the sensor is inserted into the testing position, the position of the contact pin α on the conductive layer of the sensor is denoted as α2. During the process of the contact pin α moving on the sensor along the direction α1→α2, it may scrape against the conductive layer of the sensor. Due to factors such as the material of the conductive layer of the sensor itself or poor adhesion between the conductive layer and the insulating substrate, if there is an engraved line 49 on the sensor that intersects with the movement path α1→α2, peeled-off conductive particles X may remain in the engraved line 49. If the conductive particles X come into contact with both the electrode F and the conductive region H on either side of the engraved line 49, respectively, a short circuit will occur between the electrode F and the conductive region H, which were originally separated by the engraved line 49, thereby leading to the test failure of the sensor. Since this short-circuit situation occurs during user operation, inaccurate detection results will be obtained, leading to misjudgment by the user.

### SUMMARY

In the prior art, biosensors where conductive particles generated from the thin-film conductive layer due to factors such as poor adhesion, cutting, or scraping remain in the engraved lines and cause a short circuit between electrodes that were originally disconnected, or biosensors where residual conductive particles lead to changes in electrode dimensions, cannot be used for testing. To overcome the problems of the prior art, the present invention further provides a biosensor, including a substrate, a conductive layer disposed on the substrate, separation lines being distributed on the conductive layer, and electrodes formed by separation with the separation lines, where an enlarged region is provided on at least one separation line.

In some embodiments, a spacing between outer edge lines of the enlarged region is greater than a spacing between the outer edge lines of the separation line connected thereto.

In some embodiments of the present invention, the enlarged region is formed by outward extension of at least one outer edge line of a separation line at which the enlarged region is located.

In some embodiments of the present invention, the enlarged region is disposed at an end portion where the separation line at which the enlarged region is located interfaces with an edge line of the conductive layer. Further, the enlarged region is located at a contact end or a sample contact end of the biosensor. In some embodiments, all separation lines intersecting with the edge line of the conductive layer are provided with short-circuit prevention regions.

In some embodiments of the present invention, the enlarged region may also be disposed on a movement path of a contact pin of a testing instrument moving relative to the biosensor, and is located at a position where the movement path intersects with a separation line at which the enlarged region is located. In some embodiments, the short-circuit prevention regions are provided on all separation lines that intersect with the movement path of the contact pin.

In some embodiments of the present invention, the enlarged region does not contain a conductive layer. Alternatively, a conductive layer is provided within the enlarged region, and the conductive layer within the enlarged region is separated from a conductive layer outside the enlarged region by a separation line. Further, separation lines are further provided within the enlarged region to divide the conductive layer within the enlarged region into a plurality of areas.

In some embodiments of the present invention, the enlarged region is formed by enclosure of at least two mutually diverging segments of separation lines, where the mutually diverging segments of separation lines are formed by branching a connection where a separation line at which the enlarged region is located is connected with the enlarged region.

Further, the separation line is an engraved line.

The biosensor may further include a spacer layer with an open groove and an upper cover, where a sample introduction channel is formed among the conductive layer, the open groove, and the upper cover, and a reagent is contained within the sample introduction channel.

The separation lines according to the present invention may be engraved lines formed on the thin-film conductive layer by laser etching technology, where the conductive layer within the engraved lines is removed to expose the insulating substrate. The separation lines may also be formed by using screen printing technology to print the conductive layer on the insulating substrate to form electrodes or conductive regions according to a certain pattern design, with gaps left between electrodes, or between electrodes and conductive regions, for separating the electrodes and conductive regions; alternatively, the separation lines may be produced by other technologies.

Technicians may design the routes of the engraved lines on the conductive layer according to actual conditions, or set the process parameters for laser etching of the engraved lines. For example, the short-circuit prevention lines or short-circuit prevention regions may be engraved lines that are sufficiently wider relative to other engraved lines; they may also be formed by a single engraved line splitting at the end near the edge line of the conductive layer to form a plurality of engraved lines, which then enclose with the edge line of the conductive layer; they may further be formed by the engraved line having an increased line width at the end where it interfaces the edge line of the conductive layer, forming a short-circuit prevention region together with the edge line of the conductive layer; or alternatively, the short-circuit prevention design at the end of the engraved line and the edge line of the conductive layer is achieved by completely stripping off the conductive layer in a certain pattern using laser etching technology. In the present invention, by providing short-circuit prevention lines or short-circuit prevention regions, or in other words, forming an enlarged region in a specific area of the engraved line, it is possible to effectively avoid short circuits caused by electrical conduction resulting from conductive particles remaining on the engraved line connecting the conductive regions on both sides of the engraved line (such as between electrodes, and between electrodes and conductive regions outside electrodes), or reduce the probability of short circuit occurrence. This ensures the stability of the performance of finished sensors and improves the qualification rate and yield of finished products of sensor production and preparation. The present invention has strong operability and practicality.

### BRIEF DESCRIPTION OF THE DRAWINGS

FIG. 1 is a biosensor without an enlarged region on an engraved line.
FIG. 2 is an enlarged view of FIG. 1 at L.
FIG. 3 is an enlarged view of FIG. 1 at R.
FIG. 4 is a schematic diagram of a process of inserting a sensor into a testing instrument.
FIG. 5 is a partial enlarged view of a sensor contact end being inserted into an instrument, which is an enlarged view of a dashed area in FIG. 4.
FIG. 6 is an exploded view of a biosensor.
FIG. 7 is a flow chart of a manufacturing method of a biosensor.
FIG. 8 is a schematic diagram of a semi-finished large card after laser etching.
FIG. 9 is a schematic diagram of a semi-finished long sheet containing several sensor basic units Y after cutting FIG. 8.
FIG. 10 is a front schematic diagram of a conductive layer of a biosensor in FIG. 6.

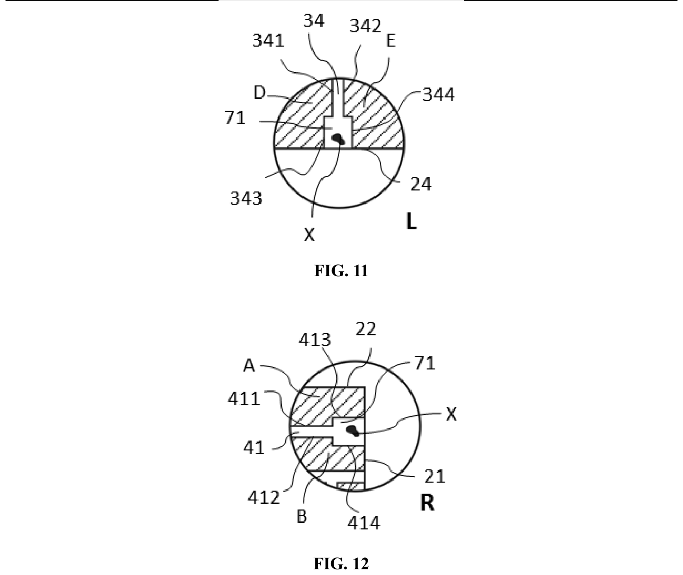

FIG. 11 is an enlarged view of FIG. 10 at L.
FIG. 12 is an enlarged view of FIG. 10 at R.
FIG. 13 is a schematic diagram of a process of inserting a biosensor with an enlarged region at an intersection of an engraved line and a contact pin movement path into a testing instrument.
FIG. 14 is a schematic diagram of a biosensor with an enlarged region at an intersection of an engraved line and a contact pin movement path.
FIG. 15 is an enlarged view of the biosensor of FIG. 14 at a contact end.
FIG. 16 is a schematic diagram of a conductive layer of a biosensor in Embodiment 2.
FIG. 17 is an enlarged schematic diagram of FIG. 16 at L.
FIG. 18 is an enlarged schematic diagram of FIG. 16 at R.
FIG. 19 is a partial enlarged view of a biosensor of the present invention being inserted into a testing instrument.
FIG. 20 is a schematic diagram of a biosensor with an enlarged region at an intersection of an engraved line and a contact pin movement path.
FIG. 21 is an enlarged view of the biosensor of FIG. 20 at a contact end.
FIG. 22 is a schematic diagram of a conductive layer of another biosensor in Embodiment 2.
FIG. 23 is an enlarged schematic diagram of FIG. 22 at L.
FIG. 24 is an enlarged schematic diagram of FIG. 22 at R.
FIG. 25 is a schematic diagram of a conductive layer of a biosensor in Embodiment 3.
FIG. 26 is an enlarged schematic diagram of FIG. 25 at L.
FIG. 27 is an enlarged schematic diagram of FIG. 25 at R.
FIG. 28 is one pattern design for a short-circuit prevention design.
FIG. 29 is four pattern designs of a short-circuit prevention design.
FIG. 30 is a schematic diagram of a biosensor with an enlarged region at an intersection of an engraved line and a contact pin movement path.
FIG. 31 is a schematic diagram of a biosensor with an enlarged region at an intersection of an engraved line and a contact pin movement path, where the enlarged region further includes an engraved line.

### DETAILED DESCRIPTION OF THE EMBODIMENTS

The present invention will be specifically described below in conjunction with specific embodiments.

### Embodiment 1:

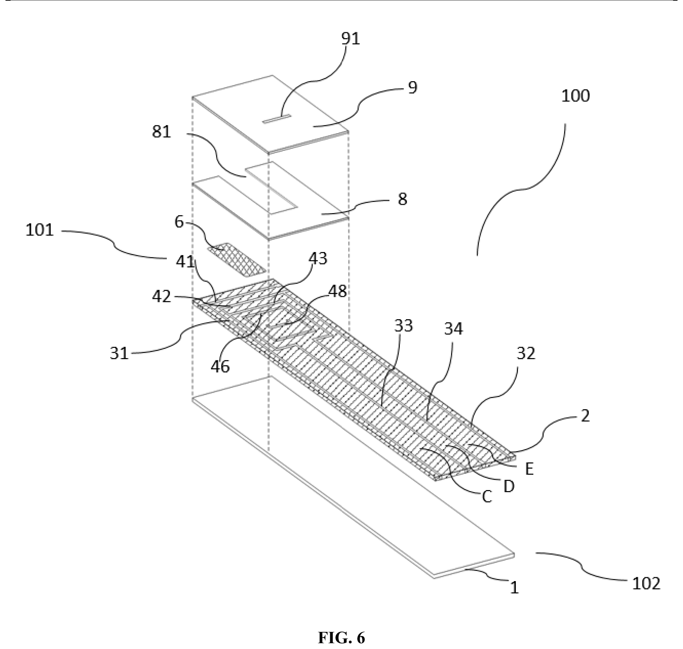

As shown in FIG. 6, the biosensor 100 includes an insulating substrate 1, a conductive layer 2 disposed on the substrate, and an electrode system formed by dividing the conductive layer via engraved lines. The electrode system includes a working electrode E, a counter electrode D, and a reference electrode C. The electrode has a sample contact end 101 for contacting a sample and a contact end 102 for contacting contacts of a testing instrument. A reagent layer 6 is applied to corresponding electrodes at the sample contact end. A spacer layer 8 with an open groove 81 covers the sample contact end of the electrodes, and an upper cover 9 covers the spacer layer 8. Thus, a sample introduction channel is formed between the conductive layer 2, an open groove 81, and the upper cover 9, where the electrodes and reagents are located. The upper cover 9 is provided with a vent hole 91, which is positioned above the open groove to discharge gas in the sample introduction channel after sample addition.

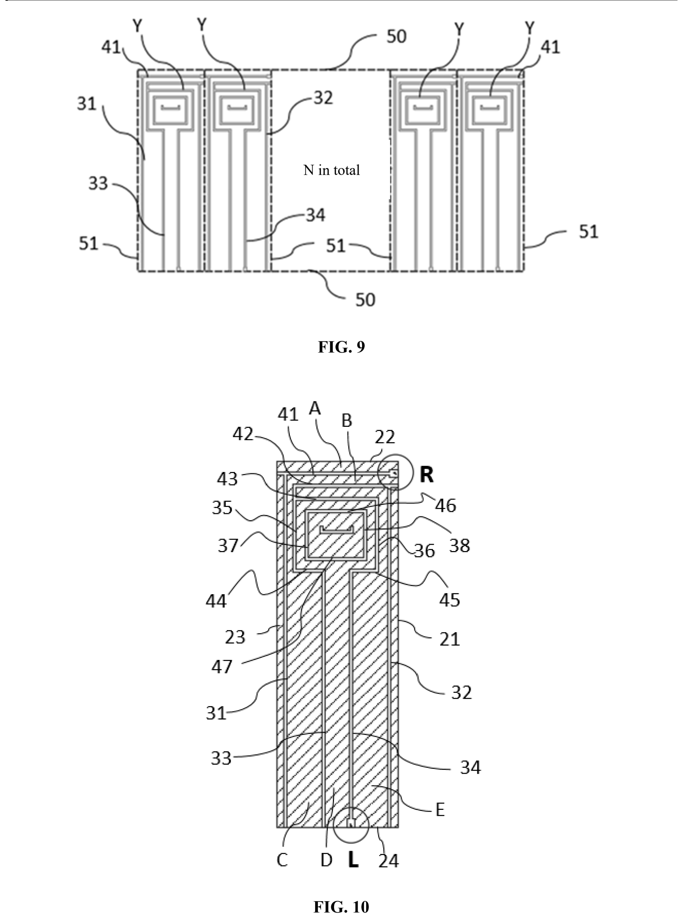

Electrodes are formed by dividing the conductive layer 2 via engraved lines, which are insulating gaps left after the conductive material is removed. A front view of the conductive layer 2 corresponding to FIG. 6 is shown in FIG. 10. The working electrode E is enclosed by engraved lines 32, 34, 35, 36, 42, 43, and 45; the counter electrode D is enclosed by engraved lines 33, 34, 35, 36, 37, 38, 43, 44, 45, 46, and 47; and the reference electrode C is enclosed by engraved lines 31, 33, 35, 41, 42, and 44.

Reagents are dispensed onto the corresponding electrodes at the sample contact end. The electrodes extend from the sample contact end to the contact end of the sensor, and conduct the electrical signals generated by the reaction between a substance to be tested and the reagent to the contact end of the sensor, and then a test result is reported to a user via the instrument.

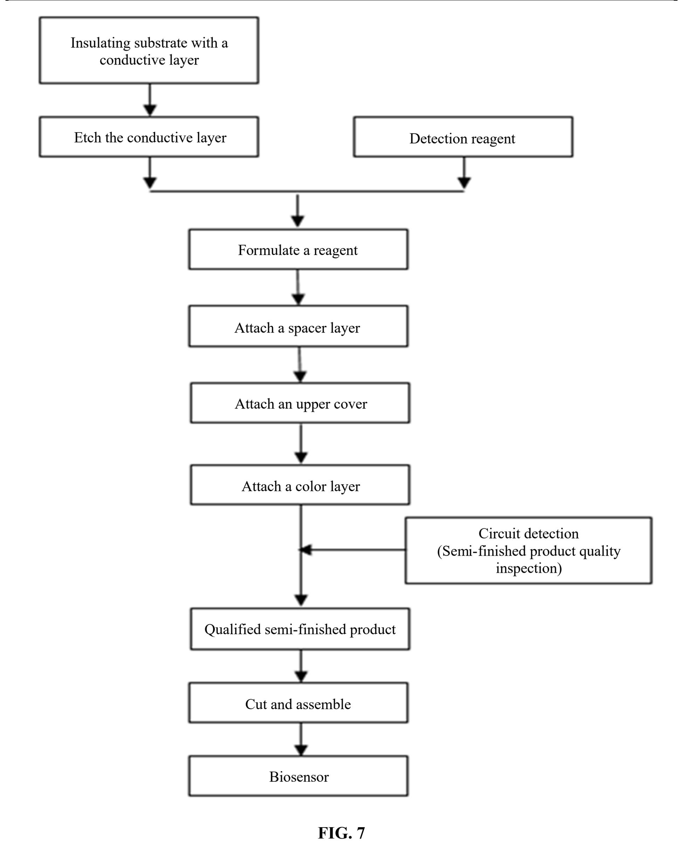

A method for manufacturing the biosensor as shown in FIG. 6 is illustrated by taking FIG. 7 as an example, including the following steps.

Step 1: laser etching of electrode patterns: according to the pre-designed electrode patterns, on a raw material with an insulating substrate and a conductive layer, laser is used to etch engraved lines on the conductive layer to form electrode patterns to obtain a large electrode card of a plurality of sensor basic units Y. Step 2: addition of a reagent layer: a detection reagent is prepared, and the prepared reagent is added to a corresponding electrodes requiring reagent addition. Step 3: the spacer layer 8 is attached to each sensor basic unit Y. Generally, the spacer layer is placed at the sample contact end of the biosensor. Step 4: the upper cover 9 is pasted onto the spacer layer 8, and roller pressing is performed. Step 5: after the upper cover is attached, a color layer is attached onto the upper cover and subjected to roller pressing to obtain a semi-finished large card. Step 6: cutting: the semi-finished large card is cut along preset cutting lines using a cutting tool to obtain finished biosensors.

Specifically, in Step 1, the conductive layer 2 on the surface of the insulating substrate is etched using laser etching technology, forming a plurality of engraved lines 31-38 and 41-49 on the conductive layer 2. The conductive layer within the engraved lines is removed, and the insulating substrate is exposed. Divided by the engraved lines, the working electrode E, the counter electrode D, and the reference electrode C are formed on the conductive layer. After the laser etching is completed, a large electrode card is obtained. The large electrode card includes a plurality of sensor basic units Y arranged side by side on the insulating substrate, which may be used to manufacture finished biosensors. Each sensor basic unit Y includes an insulating substrate, an electrode system formed by division via engraved lines, engraved lines, and other conductive regions formed by etching.

A laser cutting machine may apply different laser engraving parameters to the engraved lines, resulting in an engraved line width ranging from, for example, 0.020 mm to 0.300 mm. The engraved line width in this embodiment is 0.080 mm.

The material of the conductive layer 2 may include, but is not limited to, conductive metals or non-metals such as gold, silver, platinum, palladium, carbon, graphite, and conductive glass, or a mixture thereof. Printing, coating, electroplating, sputtering, or the like may be adopted as methods for covering the conductive layer. In this embodiment, the conductive layer is formed by coating to generate a conductive carbon layer (also referred to as a carbon film). The thickness of the conductive carbon layer may be 1-30 µm, with the thickness used in this embodiment being approximately 8 µm. The resistance of the conductive layer is 10 Ω/□-100Ω/□, and 30 Ω/□ is preferred in this embodiment.

The reagent contact with the sample in the sample introduction channel and reacts with the substance to be tested in the sample. The sample introduction channel is formed between the open groove 81 and the upper cover 9, and the surface of the upper cover facing the sample introduction channel is made of a hydrophilic layer material. The material of the spacer layer, for example, selects PET as the base, with an acrylic resin system coated as the adhesive material. The thickness of the spacer layer is generally 75 µm-150 µm, and the width of the open groove is generally 0.7 mm-1.8 mm. In this embodiment, the thickness of the spacer layer is preferably 100 µm, and the width of the open groove is preferably 1.2 mm.

The shape of the vent hole on the upper cover may be circular, square, rectangular, linear, or other shapes, and a rectangular shape is preferred in this embodiment. In this embodiment, the hydrophilic material is preferably 9901P produced by 3M. The vent hole on the upper cover may ensure that the original air in the cavity is smoothly discharged when a blood sample flows into the sample introduction channel, and ensure that the sample may flow into the cavity smoothly.

The color layer serves to facilitate product identification and protect the reagent strip from damage caused by scratches. If the upper cover itself is printed with the product name and performs a function similar to that of the color layer, the color layer is unnecessary. Alternatively, the biosensor may also be manufactured without adopting a color layer.

During the production process, the material that has the spacer layer and upper cover attached and contains the plurality of sensor basic units Y is generally referred to as a semi-finished large card. In other words, the material that has completed Steps 1 to 4 or Steps 1 to 5 is referred to as a semi-finished large card.

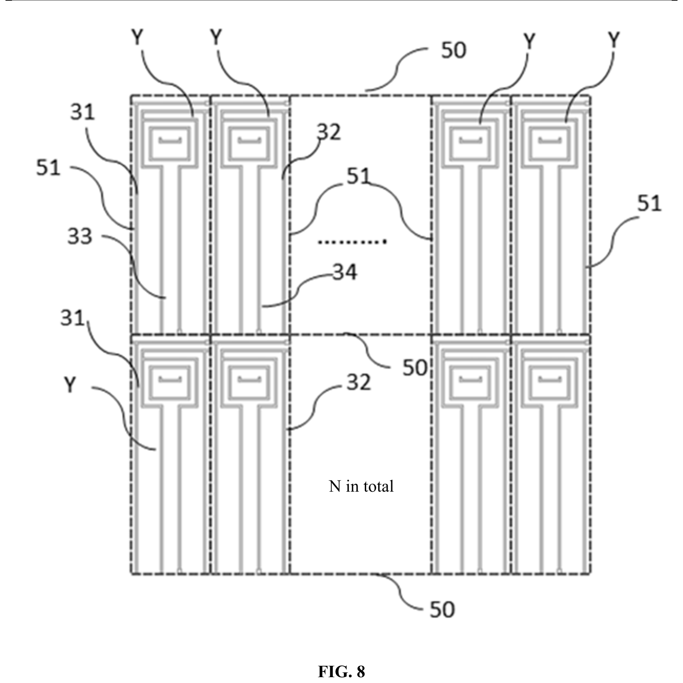

In Step 6 (cutting), the cutting tool is used along the preset cutting lines. As shown in FIG. 8, the cutting tool cuts the semi-finished large card along the positions indicated by dashed lines 50 and 51 in FIG. 8 to obtain finished biosensors. Suitable cutting methods include, but are not limited to, roller die cutting, die punching, chopping, or the like. In this embodiment, a roller cutter is used to roll-cut the semi-finished large card shown in FIG. 8 along the horizontal dashed lines 50 into semi-finished long sheets containing several sensor basic units Y as shown in FIG. 9. Then, the roller cutter is used again to cut the semi-finished long sheets along the vertical dashed lines 51 to obtain finished biosensors. When introducing the cutting process of Step 6 with reference to FIG. 8 and FIG. 9, the spacer layer and upper cover are not shown in FIG. 8 and FIG. 9 to more intuitively illustrate the cutting positions of the roller cutter. The dashed lines 50 and 51 marked on FIG. 8 and FIG. 9 do not exist in the actual product processing process.

Due to the mechanical shearing force of the cutting tool on the conductive layer, the conductive particles remaining in the engraved lines are difficult to observe. The risk arising therefrom is mainly that it may cause short circuits between adjacent electrodes or electrical conduction between electrodes and conductive regions outside the electrodes. To eliminate or reduce the probability of such unqualified sensors, the present invention adds short-circuit prevention lines or short-circuit prevention regions on the relevant engraved lines, i.e., adding short-circuit prevention engraved lines or expanding a certain area of an engraved line to form an enlarged region. The line width of the enlarged region is greater than that of the engraved line where the enlarged region is located. For example, the line width of a partial area of the engraved line is appropriately widened to reduce the short-circuit risk caused by conductive particles; and the local line width of the engraved line is appropriately widened to form a short-circuit prevention region. Even if the peeled-off or detached conductive particles fall into the short-circuit prevention region, they cannot contact the electrodes or conductive regions on both sides of the engraved line at the same time, thereby avoiding short circuits between the electrodes on both sides of the engraved line or between the electrodes and the conductive regions. In this embodiment, the width of the short-circuit prevention region is 0.14 mm-0.3 mm, and 0.2 mm is preferred in this embodiment. The present invention may reduce the risk of accidental short circuits in biosensors.

As shown in the enlarged view 11 of region L at the contact end of the biosensor illustrated in FIG. 10, the short-circuit prevention region 71 is an area where the line width of the engraved line 34 becomes larger at the end where the engraved line interfaces with the edge line 24 of the conductive layer. The short-circuit prevention region is also referred to as the engraved line enlarged region, or enlarged region for short. The spacing between the outer edge lines of the enlarged region is greater than the spacing between the outer edge lines of the engraved line connected thereto. As shown in the figure, at the position where the engraved line 34 is close to the edge line 24 of the conductive layer, two outer edge lines 341 and 342 of the engraved line 34 expand to the left and right, respectively. Further, the short-circuit prevention region 71 is formed between the two expanded outer edge lines 343 and 344 at the position close to the edge line 24 of the conductive layer. The short-circuit prevention region 71 is connected to the engraved line 34, and the line width of the short-circuit prevention region 71 formed by etching is larger than the width of the engraved line 34. In this embodiment, the conductive layer within the short-circuit prevention region 71 is removed by laser etching. The engraved line width of the short-circuit prevention region 71 is set to be larger than the size of the peeled-off conductive particles X under normal circumstances. Even when the cutting tool cuts along the preset route to obtain the edge line 24 of the conductive layer, and even if the conductive particles X remain in the engraved line 71, it will not cause electrical conduction between the electrode D and the electrode E. The short-circuit prevention region may prevent the two electrodes, which are originally disconnected from each other on both sides of the engraved line, from short-circuiting due to conductive particles remaining in the engraved line, or reduce the risk of short-circuiting between the two electrodes.

As shown in the enlarged view 12 of region R at the sample contact end of the biosensor illustrated in FIG. 10, the short-circuit prevention region 71 is an area where the line width of the engraved line 41 becomes larger at the end where the engraved line interfaces with the edge line 21 of the conductive layer. As shown in the figure, at the position where the engraved line 41 is close to the edge line 21 of the conductive layer, the two outer edge lines 411 and 412 of the engraved line 41 expand upward and downward, respectively. Further, the short-circuit prevention region 71 is formed between the two expanded outer edge lines 413 and 414 at the position close to the edge line 21 of the conductive layer. The short-circuit prevention region 71 is connected to the engraved line 41, and the line width of the short-circuit prevention region 71 formed by etching is larger than the width of the engraved line 41. In this embodiment, the conductive layer within the short-circuit prevention region 71 is removed by laser etching. The engraved line width of the short-circuit prevention region 71 is set to be larger than the size of the peeled-off conductive particles X under normal circumstances. Even when the cutting tool cuts along the preset route to obtain the edge line 21 of the conductive layer, and even if the conductive particles X remain in the engraved line 71, it will not cause electrical conduction between the electrode B and the conductive region A. The short-circuit prevention region may prevent the disconnected electrode and the conductive region outside the electrode on both sides of the engraved line from short-circuiting due to residual conductive particles, or reduce the risk of short-circuiting between the two electrodes.

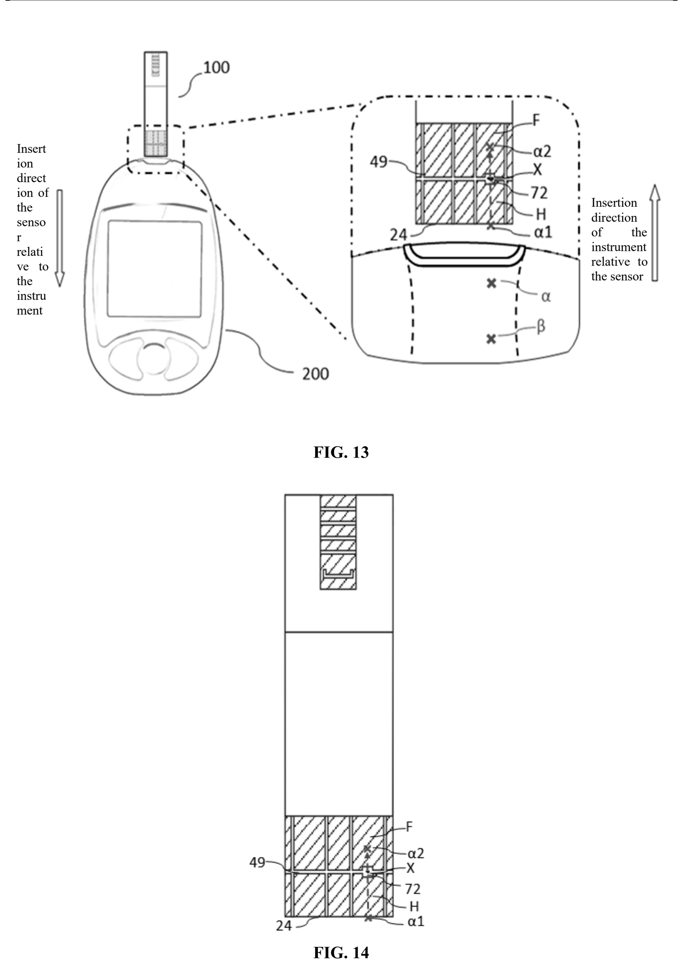

As shown in FIG. 13 to FIG. 15, the electrode F and the conductive region H on the sensor 100 are separated by the engraved line 49. A short-circuit prevention region 72 is provided in the area where the movement path of the instrument's contact pin intersects with the engraved line 49. That is, the line width of the engraved line 49 in this area is enlarged to form the short-circuit prevention region 72, and the line width of the short-circuit prevention region 72 is larger than that of the engraved line 49 where the short-circuit prevention region is located. When the sensor 100 is inserted into the testing instrument, the contact pin of the testing instrument comes into contact with the end edge 24 of the contact end of the sensor. At this point, the position of the contact pin on the conductive layer is denoted as α1. When the sensor is inserted into the testing position, the position of the contact pin on the conductive layer of the sensor is denoted as α2. During the movement of the contact pin on the sensor from α1 to α2, the instrument's contact pin may come into contact with the conductive layer. The mutual scraping between the two may cause the conductive particles X to peel off. Since the line width of the short-circuit prevention region 72 is larger than that of the conductive particles X, if the free conductive particles X remain in the short-circuit prevention region 72, the presence of the conductive particles X will not cause connection between the electrode F and the conductive region H and thus a short circuit.

### Embodiment 2

The laser etching equipment possesses highly user-customizable modes and good precision control capabilities. The patterns obtained by laser etching are consistent with the designs, or the deviation between the two is within a reasonable range. The conductive layer on the insulating substrate is vaporized, melted, or disintegrated by the high energy or high temperature generated by laser focusing, exposing the insulating substrate to form engraved lines. The line width of the engraved lines formed by laser etching is limited by the laser etching equipment or the properties of the conductive layer, and cannot be infinitely enlarged. In this embodiment, the short-circuit prevention region is formed by splicing engraved lines with appropriate line widths. That is, the short-circuit prevention region composed of a plurality of engraved lines is etched through laser etching technology. Laser etching technology may also realize the etching of a specific pattern, and the implementation is similar to completely peeling off and removing the conductive layer on the pattern. Based on the etching method of the above laser etching equipment, this embodiment is elaborated in detail with reference to FIG. 14. In this embodiment, "peeling off' is used to indicate that the laser etching technology completely etches, peels off and removes the conductive layer on a certain pattern.

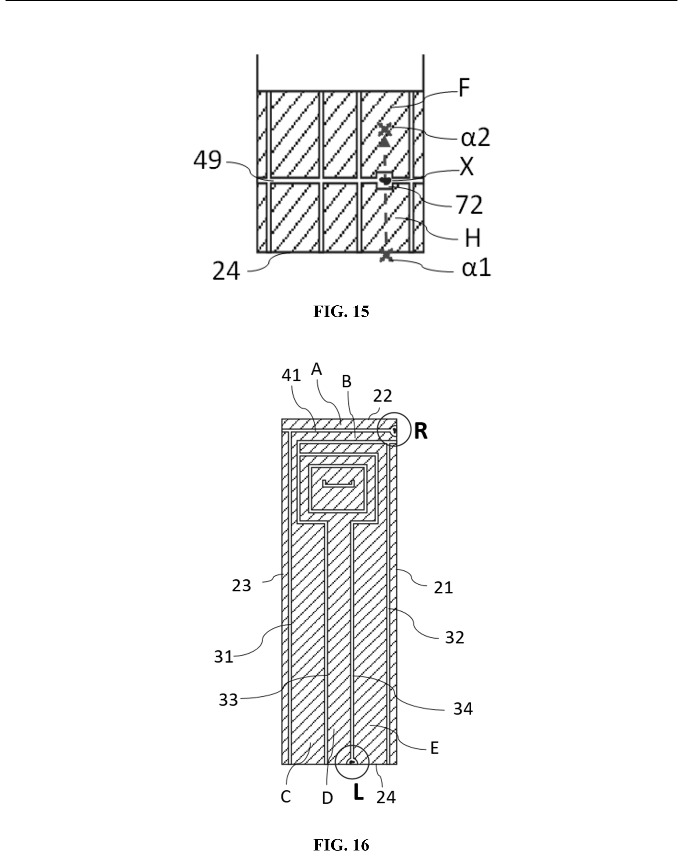

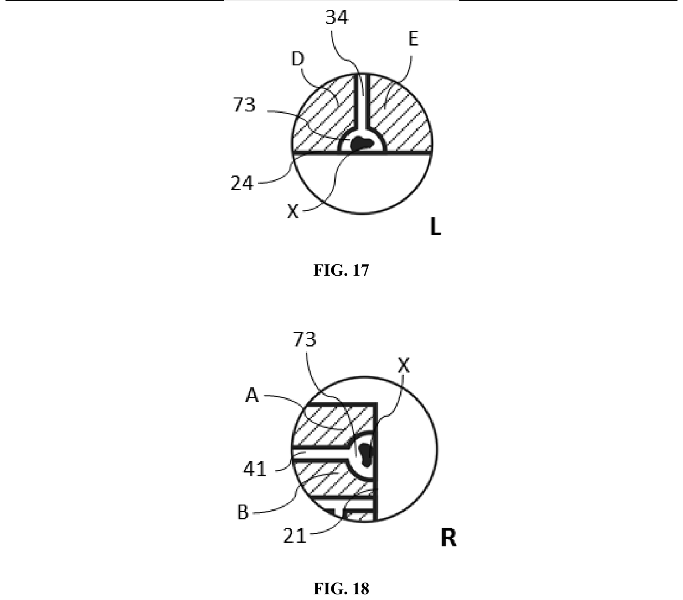

As shown in FIG. 16 to FIG. 18, the short-circuit prevention region in the sensor is formed by peeling off the engraved line at the end where the engraved line interfaces with the edge line of the conductive layer according to a preset pattern, and enclosing jointly with the edge line of the conductive layer. As shown in the enlarged schematic diagram 17 of region L at the contact end of the biosensor illustrated in FIG. 16, the short-circuit prevention region 73 connected to the engraved line 34 is semicircular, which is obtained by completely peeling off and removing all conductive layers in this semicircle through laser peeling. As shown in the figure, at the position where the engraved line 34 is close to the edge line 24 of the conductive layer, the two vertical outer edge lines of the engraved line 34 expand to the left and right respectively to form arc-shaped outer edge lines. Further, a semicircular short-circuit prevention region 73 is formed between the two outwardly expanded outer edge lines at the position close to the edge line 24 of the conductive layer. When the cutting tool cuts along the preset route to form the edge line 24 of the conductive layer of the sensor, the conductive particles X generated by scraping may remain in the short-circuit prevention region 73. Since the size of the short-circuit prevention region 73 is larger than that of the conductive particles X and the region is insulating, the conductive particles X cannot come into contact with both the electrode D and the electrode E simultaneously and cause electrical conduction between the electrode D and the electrode E. Therefore, the electrode D and the electrode E, which are separated by the engraved line 34 and disconnected from each other, will not be short-circuited due to the presence of the conductive particles X. The design of the present invention effectively improves the rate of finished products of the sensors and ensures the accuracy of detection performance.

As shown in the enlarged schematic view 18 of region R at the sample contact end of the sensor depicted in FIG. 16, the short-circuit prevention region 73 connected to the engraved line 41 is semicircular, which is obtained by completely peeling off all conductive layers in this semicircle through laser peeling. As shown in the figure, at the position where the engraved line 41 is close to the edge line 21 of the conductive layer, the two outer edge lines of the engraved line 41 expand upward and downward respectively to form arc-shaped outer edge lines. Further, a semicircular short-circuit prevention region 73 is formed between the two outwardly expanded outer edge lines at the position close to the edge line 21 of the conductive layer. When the cutting tool cuts along the preset route to form the edge line 21 of the conductive layer of the sensor, the conductive particles X generated by scraping may remain in the short-circuit prevention region 73. Since the short-circuit prevention region 73 is large in size and insulating, the conductive particles X cannot cause electrical conduction between the electrode B and the conductive region A outside the electrode B. The electrode B and the conductive region A, which are separated by the engraved line 41 and disconnected from each other, will not be short-circuited due to the conductive particles X. This ensures the size of the electrode B, improves the rate of finished products of the sensors, and guarantees the accuracy of the performance of the finished product.

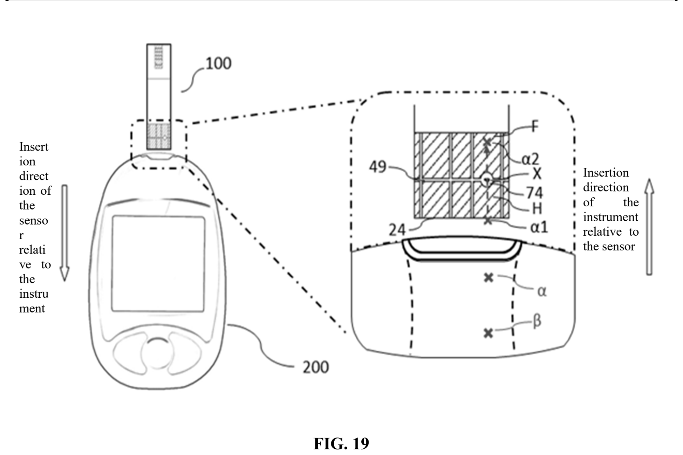

As shown in FIG. 19 to FIG. 21, the electrode F and the conductive region H at the contact end on the sensor 100 are separated by an engraved line 49. A circular short-circuit prevention region 74 is provided at the area where the movement path of the instrument's contact pin intersects with the engraved line 49. That is, the line width of the engraved line 49 in this area is enlarged to form the short-circuit prevention region 74. The line width of the short-circuit prevention region 74 is larger than the line width of the engraved line 49 where the short-circuit prevention region 74 is located, and the short-circuit prevention region 74 is obtained by completely peeling off and removing all conductive layers in the circle through laser peeling. When the sensor 100 is inserted into the testing instrument, the contact pin of the testing instrument comes into contact with the end edge 24 of the contact end of the sensor. At this point, the position of the contact pin on the conductive layer is denoted as α1. When the sensor is inserted into the testing position, the position of the contact pin on the conductive layer of the sensor is denoted as α2. During the movement of the contact pin on the sensor from α1 to α2, the instrument's contact pin may come into contact with the conductive layer. The mutual scraping between the two may cause the conductive particles X to peel off. If the peeled-off conductive particles X remain in the short-circuit prevention region 74. Since the line width of the short-circuit prevention region 74 is larger than that of the conductive particles X, the presence of the conductive particles X will not cause connection between the electrode F and the conductive region H and thus a short circuit. Therefore, it may reduce the probability of short circuits caused by the contact pin scraping the conductive layer.

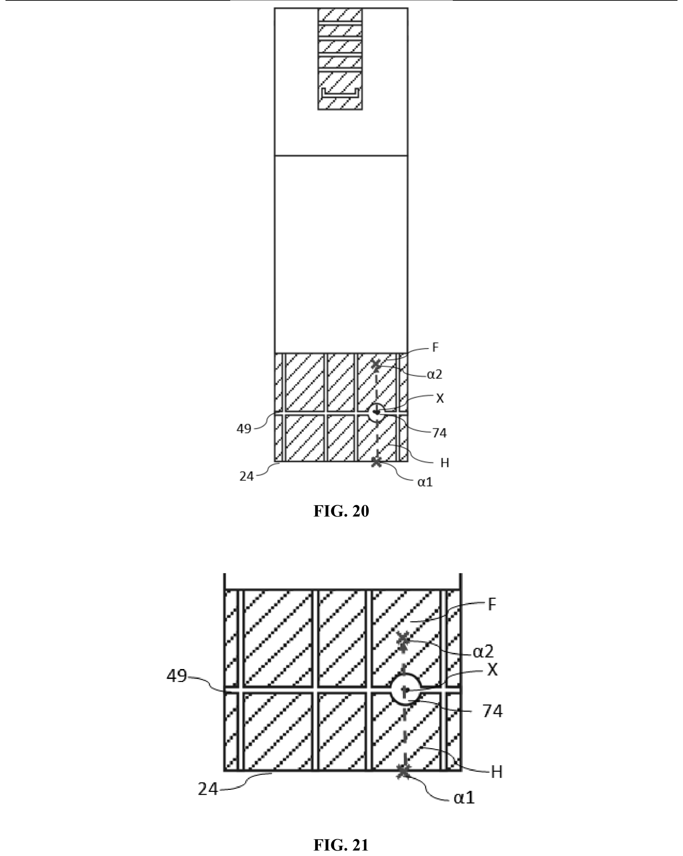

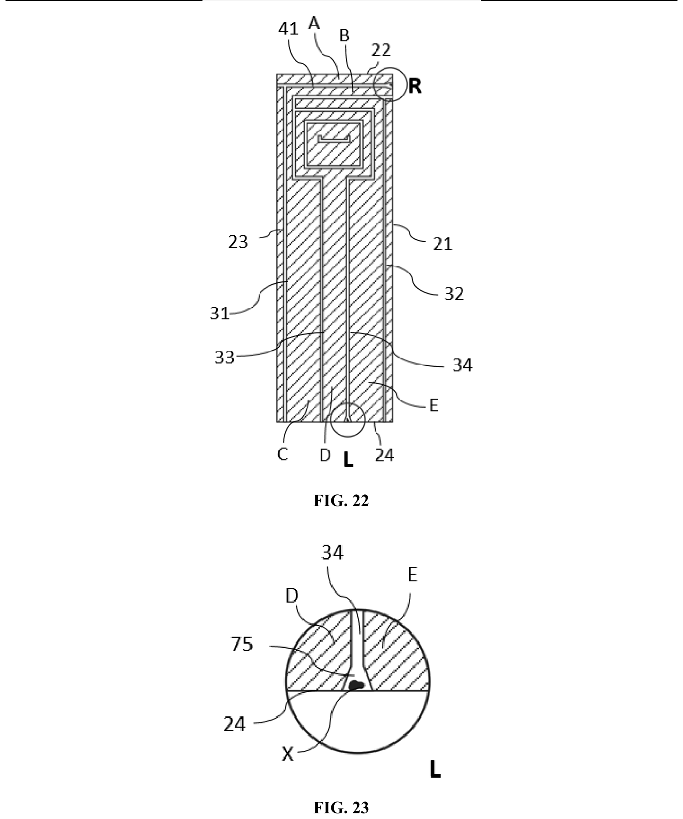

The short-circuit prevention region may be designed into shapes such as the semicircle and circle as shown in FIG. 16 and FIG. 21, or the triangle as shown in FIG. 22. The short-circuit prevention region in FIG. 6 of Embodiment 1 may also be implemented by the laser peeling technology in this embodiment. The design of the short-circuit prevention regions in FIG. 22 to FIG. 24 is based on laser etching technology. A laser etching machine is utilized to peel off the pattern through engraved lines at appropriate spacings, thereby forming a triangular-like short-circuit prevention region 75 as shown in FIG. 22. Other shapes of short-circuit prevention regions may also be obtained by using the laser peeling mode built into the laser etching machine.

### Embodiment 3

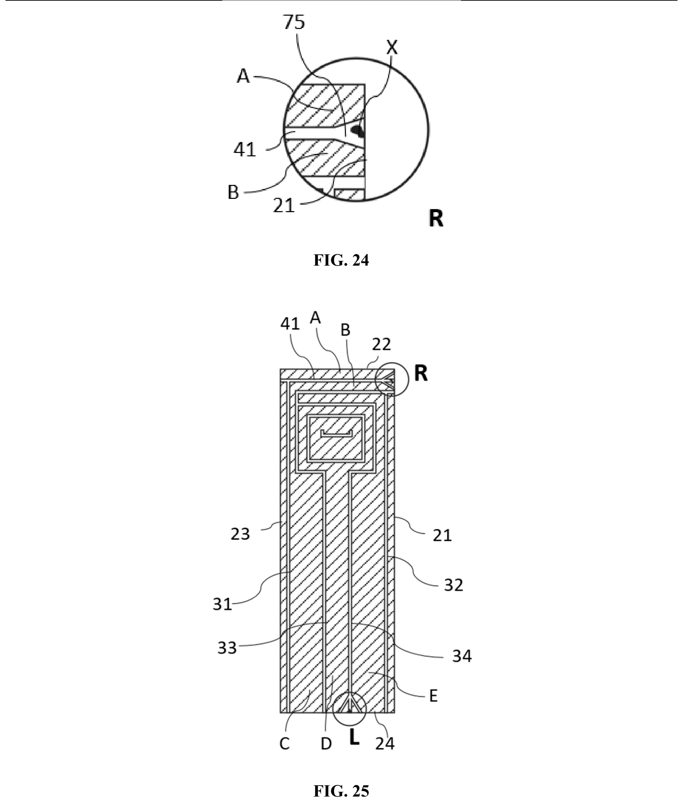

For the biosensor as shown in FIG. 25 to FIG. 27, the short-circuit prevention region 76 located at the sample contact end and the contact end is formed by the joint enclosure of a plurality of engraved lines and the edge line of the conductive layer.

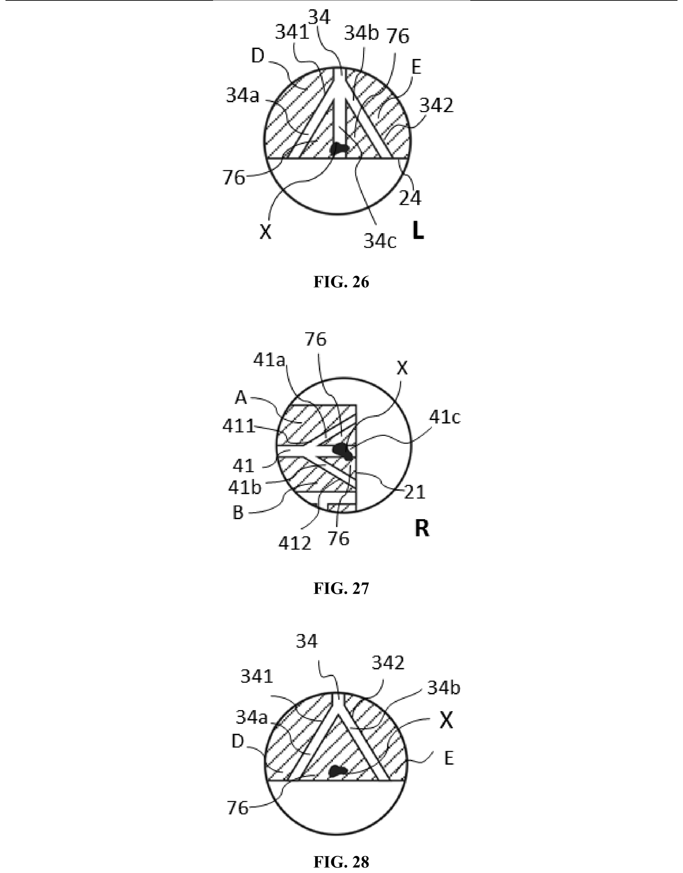

As shown in FIG. 26, the engraved line 34 used to separate the electrode D and the electrode E branches into a plurality of engraved lines 34a, 34b, and 34c at the end where the engraved line interfaces with the edge line 24 of the conductive layer. In this example, at the position where the engraved line 34 is close to the edge line 24 of the conductive layer, the outer edge lines 341 and 342 of the engraved line 34 extend obliquely leftward and obliquely rightward, respectively, to the edge line 24 of the conductive layer. Thus, the outer edge lines 341, 342 of the engraved line and the edge line 24 of the conductive layer enclose to form the short-circuit prevention region 76. The engraved line 34a, 34c and the edge line 24 of the conductive layer jointly enclose the short-circuit prevention region 76, and the engraved line 34b, 34c and the edge line 24 of the conductive layer jointly enclose the short-circuit prevention region 76. In this embodiment, the conductive layer inside the short-circuit prevention region 76 is not removed. The engraved lines 34a, 34b, and 34c may also be referred to as short-circuit prevention engraved lines. When the cutting tool cuts along the preset cutting line to obtain the edge line 24 of the conductive layer of the sensor, the conductive particles X may remain in the engraved line 34c. The presence of the conductive particles X causes electrical conduction between the originally disconnected short-circuit prevention regions 76 located on both sides of the engraved line 34c. The engraved line 34a is a segment of the engraved line 34 near the edge line of the conductive layer. In the prior art, if the engraved lines 34a and 34b are absent, the originally disconnected electrode D and electrode E will be electrically connected, leading to a short circuit between the electrode D and the electrode E of the sensor, resulting in defective products or inaccurate testing. In this embodiment, due to the presence of the short-circuit prevention engraved lines 34a and 34b, only the two short-circuit prevention regions are electrically connected, while the electrode D and the electrode E remain disconnected from each other. At this time, the electrodes D and E of the sensor are not affected by the residual conductive particles X, thereby ensuring the performance and the qualification rate of finished products of the finished sensors.

As shown in FIG. 27, the engraved line 41 used to separate the electrode B and the conductive region A branches into a plurality of engraved lines 41a, 41b, and 41c at the end where the engraved line interfaces with the edge line 21 of the conductive layer. In this embodiment, at the position where the engraved line 41 is close to the edge line 24 of the conductive layer, the outer edge lines 411 and 412 of the engraved line 41 extend obliquely upward and obliquely downward, respectively, to the edge line 24 of the conductive layer. Thus, the outer edge lines 411, 412 of the engraved line and the edge line 24 of the conductive layer enclose to form the short-circuit prevention region. The engraved line 41a, 41c and the edge line 21 of the conductive layer jointly enclose the short-circuit prevention region 76, and the engraved line 41b, 41c and the edge line 21 of the conductive layer jointly enclose the short-circuit prevention region 76. In this embodiment, the conductive layer inside the short-circuit prevention region 76 is not removed. The engraved lines 34a, 34b, and 34c may also be referred to as short-circuit prevention engraved lines. When the cutting tool cuts along the preset cutting line to obtain the edge line 21 of the conductive layer of the sensor, the conductive particles X may remain in the engraved line 41c. The presence of conductive particles X causes electrical conduction between the electrode B and the conductive region A, which were originally disconnected from each other and located on both sides of the engraved line 41c. If the engraved lines 41a and 41b are absent, the originally disconnected electrode B and conductive region A will become electrically connected, changing the area of the electrode B of the sensor and thus causing deviations in test results. In this embodiment, due to the presence of the engraved lines 41a and 41b, the conductive particles X falling in the engraved line 41c only enable electrical conduction between the two short-circuit prevention regions, while the electrode B and the conductive region A remain disconnected from each other. At this time, the area of the electrode B of the sensor is not affected by the residual conductive particles X, thereby ensuring the performance and the qualification rate of finished products of the finished sensors.

As shown in FIG. 26 and FIG. 27, when the cutting tool cuts along the preset cutting line to obtain the edge lines 24, 21 of the conductive layer, the conductive particles X may also remain in the engraved lines 34a, 34b, 34c and in the engraved lines 41a, 41b, 41c. However, only when the conductive particles remain in 34a, 34b, 34c or in 41a, 41b, 41c simultaneously will electrical conduction be established between the electrode D and the electrode E, and between the electrode B and the conductive region A outside the electrode B.

In the example of FIG. 28, the engraved line 34 used to separate the electrode D and the electrode E branches into a plurality of engraved lines 34a and 34b at the end where the engraved line interfaces with the edge line 24 of the conductive layer. At the position where the engraved line 34 is close to the edge line 24 of the conductive layer, the outer edge lines 341 and 342 of the engraved line 34 extend obliquely leftward and obliquely rightward, respectively, to the edge line 24 of the conductive layer. Thus, the outer edge lines 341, 342 of the engraved line and the edge line 24 of the conductive layer enclose to form the short-circuit prevention region 76, and there are no other engraved lines in this short-circuit prevention region 76. The conductive layer within the short-circuit prevention region 76 is not removed by laser etching. The conductive particles X falling into this short-circuit prevention region cannot establish electrical conduction between the electrode D and the electrode E. When the cutting tool cuts along the preset cutting line to obtain the edge line 24 of the conductive layer, the conductive particles X may also remain in the engraved lines 34a, 34b. However, only when the conductive particles X remain in 34a, 34b simultaneously will electrical conduction be established between the electrode D and the electrode E.

Compared with designs without a short-circuit prevention region, the technical solutions shown in FIGS. 26, 27, and 28 can all reduce the probability of electrical conduction between electrodes, or between electrodes and conductive layers outside the electrodes. Moreover, compared with the solution shown in FIG. 28, the solutions shown in FIGS. 26 and 27 have better short-circuit prevention effects.

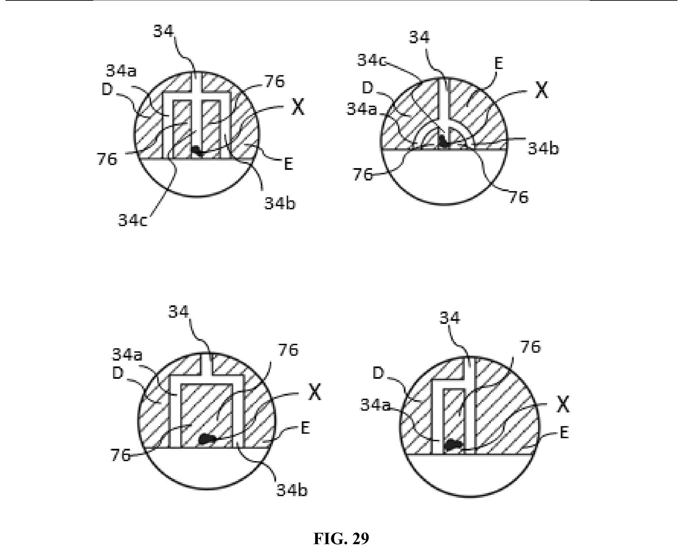

The shape, quantity, mutual included angle after separation, and starting position of separation of a plurality of engraved lines obtained by separating a single engraved line may be arranged according to actual conditions. For example, they may also be in the shape as shown in FIG. 29, where the electrodes D and E are separated by the engraved line 34, and the short-circuit prevention region 76 is formed by the enclosure of the engraved lines 34a, 34b, and/or 34c. The conductive particles X remaining in the engraved line 34c or the short-circuit prevention region will not cause a short circuit between electrodes D and E, thereby ensuring the performance accuracy of the finished sensor.

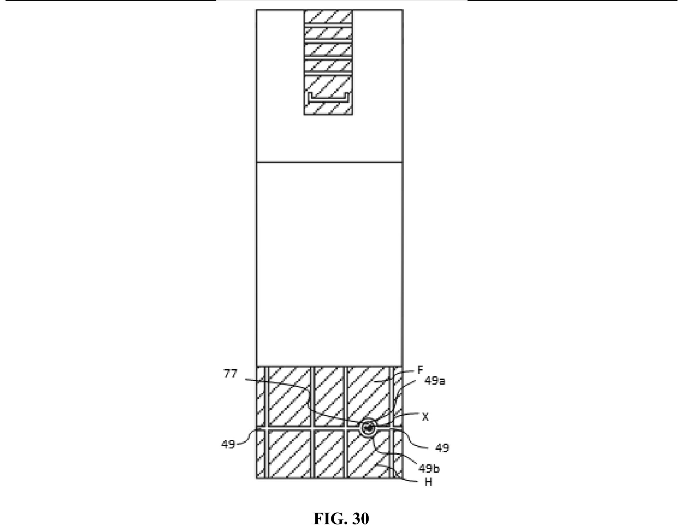

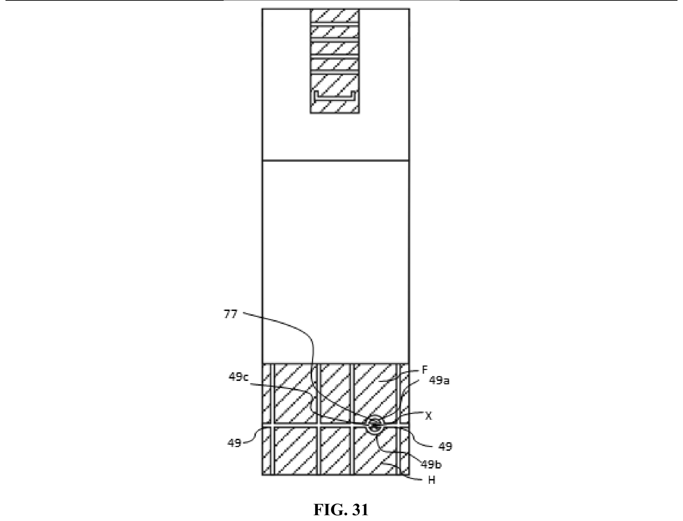

The short-circuit prevention region formed by branching a single engraved line into a plurality of engraved lines may also be disposed on the movement path of the testing instrument's contact pin on the biosensor. For the biosensor as shown in FIG. 30, a short-circuit prevention region is disposed near the intersection point of the engraved line 49 and the movement path of the testing instrument's contact pin. The engraved line 49 branches into two engraved lines 49a and 49b near this intersection point. Then, the engraved lines 49a and 49b protrude outward, loop around, and then reconnect with the engraved line 49. A circular enlarged region 77 formed by the engraved lines 49a and 49b serves as the short-circuit prevention region. The diameter of this enlarged region is larger than that of the conductive particles X. If the conductive particles X remain in the short-circuit prevention region 77, the presence of the conductive particles X will not cause connection between the electrode F and the conductive region H and thus a short circuit, which may reduce the short-circuit risk caused by the contact pin scraping the conductive layer. The biosensor as shown in FIG. 31 is substantially the same as the configuration in FIG. 30, except that the short-circuit prevention region near the intersection point of the engraved line 49 and the movement path of the testing instrument's contact pins is formed by engraved line 49 branching into three engraved lines 49a, 49b, and 49c near the intersection point. Compared with the short-circuit prevention solution shown in FIG. 30, the short-circuit prevention effect of the example in FIG. 31 is better.

Technicians may comprehensively consider factors such as production efficiency and short-circuit prevention effect, select an appropriate pattern for the short-circuit prevention region to manufacture biosensors, improve the qualification rate of finished sensors, and ensure the detection accuracy of the sensors.

The biosensors produced and prepared using the method of the present invention have a high product qualification rate. After multiple performance tests, when the prepared biosensors are used to detect samples, the detection results comply with the relevant regulations on product performance. The biosensors may be used for the detection of physiological indicators such as blood glucose, renal function, and blood lipids.

## Claims

1. A biosensor, comprising a substrate, a conductive layer disposed on the substrate, separation lines being distributed on the conductive layer, and electrodes formed by separation with the separation lines, wherein an enlarged region is provided on at least one separation line.

2. The biosensor according to claim 1, wherein the enlarged region is formed by outward extension of at least one outer edge line of a separation line at which the enlarged region is located.

3. The biosensor according to claim 1, wherein the enlarged region is disposed at an end portion where the separation line at which the enlarged region is located interfaces with an edge line of the conductive layer.

4. The biosensor according to claim 3, wherein the enlarged region is located at a contact end or a sample contact end of the biosensor.

5. The biosensor according to claim 1, wherein the enlarged region is disposed on a movement path of a contact pin of a testing instrument moving relative to the biosensor, and is located at a position where the movement path intersects with a separation line at which the enlarged region is located.

6. The biosensor according to claim 1, wherein the enlarged region does not contain a conductive layer.

7. The biosensor according to claim 1, wherein a conductive layer is provided within the enlarged region, and the conductive layer within the enlarged region is separated from a conductive layer outside the enlarged region by a separation line.

8. The biosensor according to claim 7, wherein separation lines are further provided within the enlarged region to divide the conductive layer within the enlarged region into a plurality of areas.

9. The biosensor according to claim 1, wherein the enlarged region is formed by enclosure of at least two mutually diverging segments of separation lines, wherein the mutually diverging segments of separation lines are formed by branching a connection where a separation line at which the enlarged region is located is connected with the enlarged region.

10. The biosensor according to any one of claims 1 to 9, wherein the separation lines are engraved lines.

11. The biosensor according to any one of claims 1 to 9, further comprising a spacer layer with an open groove and an upper cover, wherein a sample introduction channel is formed among the conductive layer, the open groove, and the upper cover, and a reagent is contained within the sample introduction channel.
